# EUROPÄISCHE PATENTANMELDUNG

(11) **EP 3 002 141 A1**
(43) Veröffentlichungstag der Anmeldung: **06.04.2016**
(21) Anmeldenummer: 15002817.3
(22) Anmeldetag: 01.10.2015
(51) Int. Cl.: B60H 1/00, B60H 1/22, B60P 3/20

(54) **KLEINTRANSPORTER FÜR PHARMAZEUTIKA UND CHEMIKALIEN**

(30) Priorität: 01.10.2014 DE 102014014316
(71) Anmelder: Winter Fahrzeugtechnik GmbH, 36124 Eichenzell (DE)
(72) Erfinder: Winter, Jürgen, 36163 Poppenhausen (DE)
(74) Vertreter: mepat Patentanwälte

(57) **Zusammenfassung**

Die vorliegende Erfindung stellt einen Kleintransporter zum klimatisierten Transport für Pharmazeutika und Chemikalien bereit. Der Kleintransporter weist einen klimatisierten Laderaum (2) und eine Vorrichtung zur Klimatisierung des Laderaums (2) mit einem Kühlaggregat (3) und eine Luftheizung (4) auf. Dabei ist die Luftheizung (4) mit einer Abgasleitung verbunden, die sich nach außerhalb des Fahrzeugs öffnet. Erfindungsgemäß weist das Kühlaggregat (3) einen Verdampfer auf, dessen Lufteintriltsöffnung mit einer Luftaustrittsöffnung der Luftheizung (4) einen Fluidpfad bereitstellt. Ferner ist das Kühlaggregat (3) und die Luftheizung (4) mit einer Temperatursteuerungs- und - regelungseinheit operativ gekoppelt. Die Abgasleitung ist fluiddicht und zumindest ein Abschnitt der Abgasleitung ist durch einen Unterboden (5) nach außen geführt.

## Beschreibung

Die Erfindung betrifft einen Kleintransporter zum temperierten und klimatisierten Transport, insbesondere für Pharmazeutika und Chemikalien mit den Merkmalen des Oberbegriffs des Anspruchs 1.

Aus dem Stand der Technik sind Kleintransporter für Pharmazeutika und Chemikalien, wie Kleinbusse, Hochdachkombis oder auch Kastenwägen bekannt, die einen Laderaum haben, der klimatisiert werden kann. Zur Klimatisierung kann entweder eine werkseitig eingebaute Klimaanlage genutzt oder nachträglich im Laderaum ein Kühlaggregat eingebaut werden. So können für den Laderaum bestimmte vorgegebene Temperaturen eingestellt werden. Diese Kühlaggregate weisen den Nachteil auf, dass nicht gleichzeitig geheizt werden kann.

Um den Laderaum zu heizen, kann vorgesehen sein, dass eine Heizung des Kleintransporters mitgenutzt wird. Auch können andere Heiz- und Kühlvorrichtungen vorgesehen sein.

So offenbart DE 197 08 533 A1 eine Laderaumkühlvorrichtung eines Kleintransporters, die einen mit dem Fahrzeugmotor kuppelbaren Kompressor, einen im Frontgehäuse angeordneten Kondensator, einen laderaumseitig angeordneten Verdampfer mit einem vorgeschalteten Thermostatregler sowie einen Verdampferlüfter aufweist. Der Kondensator ist in der Luftströmrichtung mehrstufig gestaffelt und als Flachwärmetauscher ausgebildet und benachbart zum Fahrzeugkühler frontseitig angeordnet. Weiter ist der Kondensator mit einem Kondensatorlüfter sowie einem Kondensatspeicher verbunden, der eine solche Kapazität aufweist, dass das Kondensat für eine Kühlung während üblicher Stau- und Ladestandzeiten ausreicht. Der Verdampfer ist mehrfach verschachtelt und Kühlmittel durchströmt und für den reinen Standbetrieb ist ein netzgespeister Elektromotor vorgesehen.

EP 2 596 978 A1 betrifft ein elektrisch antreibbares Thermofahrzeug mit einer temperierbaren, thermisch isolierten Zelle. Diese wird durch eine in einem Gehäuse angeordnete thermisch isolierende Wandung, die einen temperierbaren Innenraum umgrenzt, gebildet. Das Thermofahrzeug weist eine elektrisch betreibbare Temperiereinrichtung zur Temperierung des Innenraums und eine autonome Stromversorgungseinrichtung für die Temperiereinrichtung auf. Zudem weist das elektrisch antreibbare Thermofahrzeug zumindest eine elektrische Antriebsmaschine sowie eine die Antriebsmaschine mit elektrischer Energie versorgende Antriebs-Stromversorgungseinrichtung auf.

DE 20 2014 105192 U1 offenbart ein Transportfahrzeug zum Transport von Arzneimitteln. Das Fahrzeug hat einen Laderaum, in dem eine Temperiereinrichtung mit ventilierender Funktion zur Zuführung von temperierter Luft in den Laderaum vorgesehen Ist, die zur Temperaturregelung der Luft im Laderaum und zu deren Umwälzung dient und die Teil einer Kälte- und Wärmeanlage mit elektronischer Temperaturregelung des Transportfahrzeugs ist. Dabei ist im Laderaum pro Radkasten eine Radkastenverkleidung vorgesehen, die eine Seitenwand, eine obere Abdeckwand, eine vordere Stirnwand und eine hintere Stirnwand, wenigstens eine Lufteintrittsöffnung und wenigstens eine Luftaustrittsöffnung und wenigstens einen Lüfter oder Ventilator aufweist, der sich in oder an der wenigstens einen Lufteintrittsöffnung oder an der wenigstens einen Luflaustrittsöffnung befindet und zur Umwälzung der Luft im Laderaum dient.

Nachteilig hierbei ist, dass die erwärmte Luft nicht gleichmäßig im gesamten Laderaum verteilt werden kann und der Laderaum nur bei laufendem Motor des Kleintransporters temperiert wird, sodass eine durchgängig konstante Temperierung bei nicht laufendem Motor nicht erreicht werden kann.

Ausgehend von dem genannten Stand der Technik ist es Aufgabe der vorliegenden Erfindung, einen verbesserten Kleintransporter für Pharmazeutika und Chemikalien bereitzustellen, bei dem der Laderaum in allen Bereichen entsprechend konstant klimatisiert werden kann.

Diese Aufgabe wird durch einen Kleintransporter mit den Merkmalen des Anspruchs 1 gelöst.

Weiterbildungen bzw. bevorzugte Ausführungsformen des Kleintransporters sind in den Unteransprüchen ausgeführt.

Eine erfindungsgemäße Ausführungsform bezieht sich auf einen Kleintransporter für Pharmazeutika und Chemikalien mit Laderaum und einer Vorrichtung zur Klimatisierung des Laderaums, die ein Kühlaggregat und eine Luftheizung aufweist.

Ein "Kleintransporter" im Sinne der Erfindung ist jedes Kraftfahrzeug, das eine getrennt von der Fahrgastzelle temperierbare und klimatisierbare Transportzelle zum Transport temperaturempfindlicher Güter, wie eben Arzneimittel, Rohstoffe hierfür oder Chemikalien aufweist. Dies kann ein Hochdachkombi, ein Kastenwagen, ein Kleinbus, ein Van oder u. a. ein mittelgroßer Lieferwagen sein. In der Regel hat ein solcher Kleintransporter einen Laderaum mit einem Volumen in einem Bereich von 2 m³ bis 10 m³.

"klimatisiert" heißt im Sinne der Erfindung, dass der Laderaum mittels einer bestimmten Steuerungs- und Regelungsautomatik in einem Temperaturbereich von 15 °C bis 25 °C geregelt bzw. gesteuert werden kann und die Luft im Laderaum damit erwärmt oder gekühlt und der Laderaum mit klimatisierter Luft durchspült wird. Ein Transporter für Gefrier- oder Kühlgut, wie bekannt aus dem Lebensmittelbereich, mit entsprechendem Kühl- oder Gefrieraggregat, wird hierin nicht als "klimatisiert" verstanden.

Der Laderaum ist eine abgeschlossene separat klimatisierbare Zelle bei geschlossener Tür.

Erfindungsgemäß ist die Luftheizung mit einer Abgasleitung verbunden, die sich nach außerhalb des Fahrzeugs erstreckt. Ferner weist das Kühlaggregat einen Verdampfer auf, dessen Lufteintrittsöffnung mit einer Luftaustrittsöffnung der Luftheizung einen Fluidpfad bereitstellt. Die Luftheizung und der Verdampfer sind also nicht durch ein fluidisches Verbindungselement, etwa ein Rohr, Schlauch o. ä. verbunden, sondern lediglich in unmittelbarer Nähe angeordnet, sodass von der Luftheizung ausgestoßene warme Luft in die Luftansaugöffnung des Verdampfers einbläst. Der Verdampfer saugt daher eine Mischung aus aufgeheizter Luft der Luftheizung sowie aus Laderaumluft an. Dabei sind das Kühlaggregat und die Luftheizung mit einer Temperatursteuerungs- und Regelungseinheit operativ gekoppelt. Die Abgasleitung ist fluiddicht, wobei ein oder mehrere Abschnitt(e) der Abgasleitung durch den Unterboden des Laderaums tritt/treten.

"Operativ gekoppelt" heißt im Sinne der Erfindung, Einstellen und damit Festlegen einer gewünschten Temperatur, das ein Ansteuern und Regeln der Luftheizung und des Kühlaggregats zur Folge hat, sodass im Laderaum bspw. vorgewärmte Luft der vorbestimmten Temperatur verteilt wird.

Vorteilhaft wird hierbei der Verdampfer direkt mit der Luft, die von der Luftheizung vorgewärmt wurde, beaufschlagt. Dem Verdampfer ist ein System mit einem oder mehreren Ventilatoren vorgeschaltet. Das Ventilatorsystem kann genutzt werden, um die Luft, die von der Luftheizung erwärmt wurde, im Laderaum zu verteilen. Es erfolgt eine gleichmäßigere Verteilung der klimatisierten Luft im Laderaum. Wichtig ist, dass die Komponenten "Heizung" und "Verdampfer" nicht baulich verbunden sind, sondern so angeordnet sind, dass die Heizung direkt in die Lufteintrittsöffnung des Verdampfers einbläst und somit ein Gemisch aus heißer Luft aus der Heizung sowie vom Verdampfer zusätzlich angesaugter Laderaumluft entsteht und vom Verdampfer ausgeblasen wird.

Gemäß einer weiteren Ausführungsform kann die Vorrichtung zur Klimatisierung des Laderaums eine vollständig integrierte Klimatisierungsvorrichtung sein, die keine Dachaufbauten erfordert. Hierdurch werden die Außenabmaße des Fahrzeugs nicht verändert, was der Mobilität in Ballungszentren zu Gute kommt und auch eine einfachere Zulassung ermöglicht.

Ferner können die Luftheizung und das Kühlaggregat als platzsparende Einheit verbaut sein. Beispielsweise kann dies in einem Dachbereich des Laderaums geschehen, etwa in einem vorderen Dachbereich, vorteilhaft an einem vorderen an die Laderaumtrennwand angrenzenden Dachbereich. Hierdurch wird das praktisch nutzbare Volumen nur unwesentlich eingeschränkt, da ein solcher Transporter selten bis zur Unterkante des Laderaums beladen wird. Der Abschnitt der Decke, an dem die Klimatisierungsvorrichtung befestigt ist, grenzt bevorzugt an die Trennwand zur Fahrgastzelle an, sodass die Installation in Bezug auf Leitungsführung (Kabel und Abluft) konstruktiv günstig ist. Alternativ oder zusätzlich kann die Temperatursteuerungs- und -regelungseinheit in einer Fahrgastzelle angeordnet sein.

In einer bevorzugten Ausführungsform kann vorgesehen sein, dass die Luftheizung eine Kraftstoff-Luftheizung, bevorzugt eine Diesel-Luftheizung ist. Eine solche Heizung hat eine Brennkammer, die mit der Abgasleitung verbunden ist. Damit wird vorteilhaft erreicht, dass auch bei abgestelltem Fahrzeug, ohne laufenden Motor, die gewünschte Temperatur im Laderaum erhalten bleibt.

Die Abgasleitung kann beispielsweise senkrecht in einem vorderen Eckbereich des Laderaums, der an die vordere Laderaumtrennwand angrenzt, verlaufen. Alternativ oder zusätzlich kann die Abgasleitung von einer Wärmedämmung umgeben sein, die vorteilhaft wenigstens doppelwandig ist. Hierdurch kann das Abgas sicher geführt werden und es wird verhindert, dass Abgase der Luftheizung in den Laderaum eindringen. Zudem verringert die doppelte Isolierung einen Wärmeeintrag aus dem Abgas, was einen zusätzlichen Kühlaufwand zur Folge hätte.

Die Erfindung sieht ferner vor, dass ein oder mehrere Abschnitt(e) der Abgasleitung von einem Blechkanal zumindest teilweise umgeben sein können. Der Blechkanal kann aus Lochblechen zusammengesetzt sein, wobei einzelne Bleche in einem Querschnitt rechtwinklig oder U-förmig sind und zusammengesetzt den Blechkanal bilden. Die Abgasleitung kann so auf ihrer gesamten Länge geeignet geschützt werden; auch vor Verbrennungen, die bei Defekt der Isolierung drohen.

Auch kann der Laderaum einen Abschnitt am Unterboden aufweisen, der einen gekapselten Abschnitt der Abgasleitung umfasst und in dem der genannte Abschnitt der Abgasleitung, in der an der Luftheizung entstehendes Abgas nach außen zu führen ist, gehalten wird.

Zur Steuerung bzw. Regelung der Innentemperatur kann der Kleintransporter geeignete Sensoren zur Temperaturüberwachung aufweisen. Generell wird/werden einer oder mehrere Innensensor/en vorgesehen sein, der/die die Innentemperatur des Laderaums erfasst/erfassen. Es kann aber auch die Außentemperatur mittels Außensensor erfasst werden, um so bereits frühzeitig auf eine zu erwartende Innenraumtemperaturänderung hingewiesen zu werden; es kann darüber hinaus sinnvoll sein einen Einstrahlungssensor einzusetzen, da häufig der Großteil der zugeführten Wärmemenge nicht rein konvektiv übertragen wird. Geeignete Temperatursensoren sind auf dem Markt erhältlich und dem Fachmann bekannt. Damit auf Dauer ein den einschlägigen Normen entsprechender Betrieb möglich ist, müssen die Temperatursensoren kalibriert sein und einmal jährlich nachkalibriert werden.

In einer weiteren Ausführungsform ist die Steuerungs- und Regelungseinheit mit digitalen Bedienelementen und/oder einem Monitor, der ein berührungssensitiver Bildschirm sein kann, gekoppelt. Der Monitor zeigt die für die Temperierung/Klimatisierung erforderlichen Parameter, etwa die Außentemperatur, Innentemperatur und Luftfeuchte des Laderaums, an und kann, wenn er als Touchscreen ausgebildet ist, zur Einstellung genutzt werden.

Vorteilhaft sind ferner das geringe und leichte Eigengewicht der Abluftheizung, sowie die leicht zu reinigende Klimatisierungsvorrichtung. Dadurch, dass das Kühlaggregat und das Heizgerät in Form der Luftheizung sowie dessen Steuerungs- und Regelungstechnik miteinander verknüpft sein können, ist keine separate Klimaanlage des Kleintransporters notwendig, die sonst bereits werkseitig bereitgestellt werden muss. Der Laderaum des Kleintransporters kann unabhängig davon, ob der Motor des Kleintransporters läuft oder nicht, jederzeit in geeigneter Weise klimatisiert werden. Hierfür kann vorgesehen sein, dass das Kühlaggregat bzw. dessen Kompressor einen eigenen, vorzugsweise elektrischen, Antrieb hat Alternativ kann der Kompressor des Kühlaggregats auch von dem Antriebsmotor des Kleintransporters über Riemen o. ä. angetrieben werden, was allerdings dazu führt, dass das Kühlaggregat nur bei laufendem Antriebsmotor des Transporters einsatzbereit ist.

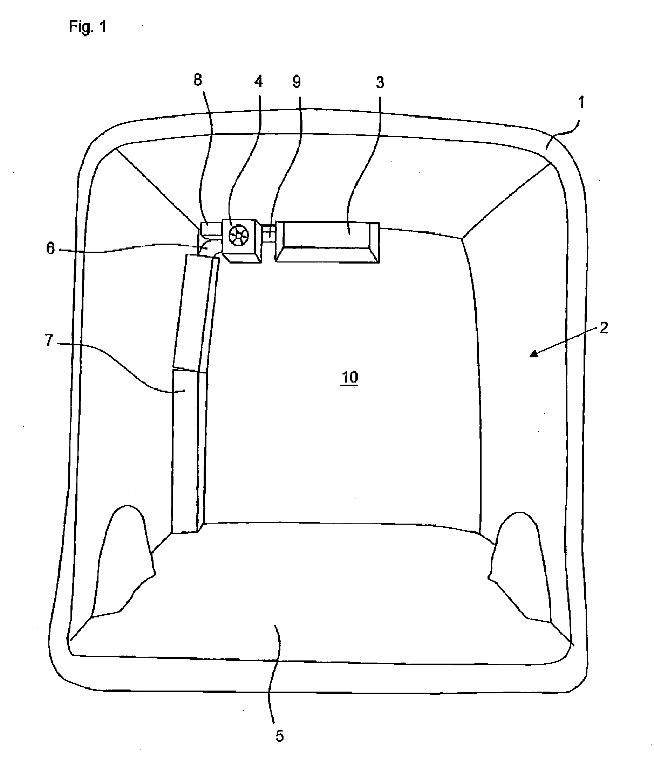

Weitere Ausführungsformen sowie einige der Vorteile, die mit diesen und weiteren Ausführungsformen verbunden sind, werden durch die nachfolgende ausführliche Beschreibung unter Bezug auf die begleitende Figur deutlich und besser verständlich. Die Figur ist lediglich eine schematische Darstellung einer Ausführungsform der Erfindung.

Dabei zeigt die einzige Figur eine Innenansicht eines Laderaums eines erfindungsgemäßen Kleintransporters.

Die erfindungsgemäße Vorrichtung bezieht sich auf einen Kleintransporter für Pharmazeutika und Chemikalien, dessen Laderaum klimatisierbar ist.

Eine Ladeabschnitt 1 eines Kleintransporters weist nach der Figur einen Laderaum 2 mit einer Wand 10 auf, die den Laderaum 2 zu einer Fahrergastzelle oder einem Fahrerhaus (figurativ nicht dargestellt) abtrennt. Im Laderaum 2 ist eine Vorrichtung zur Klimatisierung angeordnet, die neben einem Kühlaggregat 3 eine Diesel-Luftheizung 4, und eine Regelungs- und Steuerungseinheit 8 umfasst. Die Diesel-Luftheizung 4 ist neben dem Kühlaggregat 3 benachbart angeordnet und bläst in eine Lufteintrittsöffnung des Kühlaggregats 3 direkt ein, sodass die Verdampferlüfter des Kühlaggregats 3 ein Gemisch aus heißer Heizungsluft und Laderaumluft ausblasen.

Die Funktion der Klimatisierungsvorrichtung wird durch die Temperaturregelungs- und Steuerungseinheit 8 mittels eines oder mehrerer Innentaumtemperatursensoren (figurativ nicht dargestellt) geregelt bzw. gesteuert.

Die in dem Kühlaggregat 3 angebrachten und dem Verdampfer vorgeschalteten Ventilatoren sorgen dafür, dass die von der Luftheizung 4 vorgewärmte Luft gleichmäßig im Laderaum 2 verteilt werden kann.

Die Luftheizung 4 wird mit Kraftstoff des Kleintransporters betrieben und hat zur Abgasabführung eine Abgasleitung 6, die innerhalb eines Blechkanals 7 gekapselt entlang der Wand 10 bzw. entlang der Ecke an der Wand 10 zum Unterboden 5 geführt ist. Der Blechkanal 7 ist aus Lochblechen zusammengesetzt. Die Abgasleitung 6 besteht in der Regel aus einem doppelt isolierten Schlauch, sodass keinerlei Abgase in den Laderaum 2 gelangen können.

In dem Unterboden 5 des Laderaums 2 ist die Abgasleitung 6 gekapselt durch den Unterboden 5 nach außen geführt, sodass die Abluft bzw. das Abgas der Luftheizung 4 aus dem Ladeabschnitt des Kleintransporters 1 geführt werden kann, ohne dass die Luft innerhalb des Laderaums 2 mit Abgas kontaminiert oder deren Temperatur durch das heiße Abgas verändert wird.

### BEZUGSZEICHENLISTE

- 1: Ladeabschnitt eines Kleintransporters
- 2: Laderaum
- 3: Kühlaggregat
- 4: Luftheizung
- 5: Unterboden
- 6: Abgasleitung
- 7: Blechkanal
- 8: Regelungs- und Steuerungseinheit
- 10: Seitenwand

## Patentansprüche

1. Kleintransporter zum klimatisierten Transport für Pharmazeutika und Chemikalien, der einen klimatisierten Laderaum (2) und eine Vorrichtung zur Klimatisierung des Laderaums (2) mit einem Kühlaggregat (3) und einer Luftheizung (4) aufweist, wobei die Luftheizung (4) eine Abgasleitung (6) aufweist, die sich nach außerhalb des Kleintransporters erstreckt,
**dadurch gekennzeichnet, dass**
- das Kühlaggregat (3) einen Verdampfer aufweist, dessen Lufteintrittsöffnung mit einer Luftaustrittsöffnung der Luftheizung (4) einen Fluidpfad bereitstellt und
- das Kühlaggregat (3) und die Luftheizung (4) mit einer Temperatursteuerungs- und -regelungseinheit (8) operativ gekoppelt sind, und
- die Abgasleitung (6) fluiddicht ist und zumindest ein Abschnitt der Abgasleitung (6) durch einen Unterboden (5) des Laderaums (2) tritt.

2. Kleintransporter nach Anspruch 1,
**dadurch gekennzeichnet, dass**
die Vorrichtung zur Klimatisierung des Laderaums (2) eine vollständig laderaumintegrierte Klimatisierungsvorrichtung ist, die keine Dachaufbauten erfordert.

3. Kleintransporter nach Anspruch 1 oder 2,
**dadurch gekennzeichnet, dass**
die Luftheizung (4) und das Kühlaggregat (3) als platzsparende Einheit in einem Dachbereich des Laderaums (2) verbaut sind, und/oder
- die Temperatursteuerungs- und -regelungseinheit (8) in der Fahrgastzelle verbaut ist.

4. Kleintransporter nach Anspruch 3,
**dadurch gekennzeichnet, dass**
die Luftheizung (4) und das Kühlaggregat (3) in einem vorderen, an eine vordere Laderaumtrennwand angrenzenden Dachbereich verbaut sind.

5. Kleintransporter nach zumindest einem der Ansprüche 1 bis 4,
**dadurch gekennzeichnet, dass**
die Luftheizung (4) eine Kraftstoff-Luftheizung ist, die eine Brennkammer aufweist,
die zur Abführung von Brenngasen mit der Abgasleitung (6) verbunden ist.

6. Kleintransporter nach zumindest einem der Ansprüche 1 bis 5,
**dadurch gekennzeichnet, dass**
die Abgasleitung (6)
- senkrecht in einem vorderen Eckbereich des Laderaums (2), der an die Laderaumtrennwand angrenzt, verläuft, und/oder
- von einer Wärmedämmung umgeben ist.

7. Kleintransporter nach Anspruch 6,
**dadurch gekennzeichnet, dass**
die Wärmedämmung zumindest eine doppelwandige Wärmedämmung ist.

8. Kleintransporter nach zumindest einem der Ansprüche 1 bis 7,
**dadurch gekennzeichnet, dass**
zumindest ein Abschnitt der Abgasleitung (6) von einem Blechkanal (7) umgeben ist.

9. Kleintransporter nach zumindest einem der Ansprüche 1 bis 8,
**dadurch gekennzeichnet, dass**
die Vorrichtung zur Klimatisierung des Laderaums (2) dazu ausgebildet ist, den Laderaum (2), auf einer konstanten Temperatur in einem Bereich von 10 bis 27 °C zu halten.

10. Kleintransporter nach zumindest einem der Ansprüche 1 bis 9,
**dadurch gekennzeichnet, dass**
das Kühlaggregat (3) zumindest einen Ventilator umfasst, der an einer Luftaustrittsöffnung des Verdampfers angeordnet ist.
